# EUROPEAN PATENT SPECIFICATION

(11) **EP 1 598 147 B1**
(45) Date of publication and mention of the grant of the patent: **26.03.2008**
(21) Application number: 05010907.3
(22) Date of filing: 19.05.2005
(51) Int. Cl.: B24D 3/18, B24D 7/06, C03C 11/00, C03C 14/00, C09K 3/14

(54) **Vitrified bond grindstone and manufacturing process thereof**
Keramisch gebundene Schleifscheibe und Herstellungsverfahren derselben
Meule à liant vitrifié et son procédé de fabrication

(30) Priority: 20.05.2004 JP 2004150003
(43) Date of publication of application: 23.11.2005
(73) Proprietor: Disco Corporation, Tokyo 143-8580 (JP)
(72) Inventor: Sekiya, Shinnosuke, Ota-ku Tokyo 143-8580 (JP); Iwaoka, Teiji, Ota-ku Tokyo 143-8580 (JP)
(74) Representative: Müller-Boré & Partner Patentanwälte

(56) References cited:
- US-A- 2 248 990
- US-A- 4 541 842
- US-A- 5 203 886
- US-A- 5 738 697
- PATENT ABSTRACTS OF JAPAN vol. 2003, no. 09, 3 September 2003 (2003-09-03) & JP 2003 136410 A (ALLIED MATERIAL CORP), 14 May 2003 (2003-05-14)

## Description

The present invention relates to a process for manufacturing a vitrified bond grindstone obtained by bonding together super-abrasive grains with a vitrified bond as per the preamble of claim 1.

An example of such a process, albeit wherin the abrasive grains are not super-abrasive, is disclosed by US 2 248 990.

As widely known to people of ordinary skill in the art, in the production process of a semiconductor device, the back surface of a semiconductor wafer having a plurality of circuits such as IC's and LSI's is ground to a predetermined thickness by a grinding machine before it is divided into individual chips. To grind the back surface of the semiconductor wafer efficiently, a grinding machine equipped with a rough grinding unit and a finish grinding unit is generally used. A vitrified bond grindstone or a metal bond grindstone, which are obtained by bonding together diamond abrasive grains having a relatively large size with a vitrified bond or metal bond is used in the rough grinding unit whereas a resin bond grindstone obtained by bonding together diamond abrasive grains having a small size with a resin bond is used in the finish grinding unit.

In the vitrified bond grindstone, as abrasive grains are bonded together by means of a bonding material essentially composed of silicon dioxide or the like, it has high abrasive grain holding force and consequently, its grinding capacity is kept. On the other hand, since it firmly holds the abrasive grains, it is unsatisfactory in terms of self-sharpening. Meanwhile, as the resin bond grindstone is obtained by bonding together abrasive grains with a soft resin bonding material, its contact to a workpiece is soft and its abrasive grain holding force is low with the result that its self-sharpening is excellent. Due to the above characteristic properties of these grindstones, the vitrified bond grindstone is mainly used as a rough grindstone whereas the resin bond grindstone is mainly used as a finish grindstone

Accordingly, as the resin bonding material for the resin bond grindstone is soft as described above, when the particle diameter of the abrasive grains is as small as 2 µm or less, the abrasive grains are forced into the inside of the resin bond during grinding, whereby the grinding capacity lowers and grinding burn occurs. Therefore, abrasive grains having a diameter of 2 to 4 µm (#2000) or more must be used for the resin bond grindstone, thereby making it difficult to carry out fine finish grinding.

Since the vitrified bond grindstone has high abrasive grain holding force as described above, even when its abrasive grains have a diameter of 0.5 µm (#8000) or less, the abrasive grains are not forced into the inside of the vitrified bond during grinding, thereby making it possible to maintain the grinding capacity. However, since the vitrified bond firmly holds abrasive grains as described above, the vitrified bond grindstone is unsatisfactory in terms of self-sharpening and produces a striped scratch on the ground surface.

To solve the above problems, JP-A 2003-136410 discloses a vitrified bond grindstone having an excellent self-sharpening, which is obtained by forming pores in an abrasive grain layer formed by bonding together abrasive grains with a vitrified bond.

In the vitrified bond grindstone disclosed by the above publication, the pores formed in the abrasive grain layer formed by bonding together abrasive grains with the vitrified bond are openpores. Therefore, when the porosity is increased, the strength of the grindstone lowers, thereby making it impossible to obtain predetermined grinding pressure. In fact, the vitrified bond grindstone disclosed by the above publication has a porosity of 25 to 45 vol%. Therefore, it cannot be said that its self-sharpening is satisfactory.

US 2,248,990 discloses a process by means of which a dense material such as bauxite or alumina is made porous by the introduction into and subsequent removal of a volatilizable substance, as for example naphthalene, whereby the material is honeycombed in such a manner that when employed for fire bricks or the like it is capable of expansion or contraction without fracture, and when employed as an abrasive either in wheel form or as a grain it prevents glaze through the breakdown of the multiple wall structure arising from the porosity of the substance.

It is an object of the present invention to provide a manufacturing process for a vitrified bond grindstone having an improved self-sharpening by ensuring its strength to increase its porosity.

According to the present invention, the above object can be attained by a process for manufacturing a vitrified bond grindstone that is made of super-abrasive grains bonded together with a vitrified bond having closed pores with a porosity of 75 to 95 vol%, characterized in that it comprises the steps of:
kneading together 25 wt% of diamond abrasive grains having a particle diameter of 2 µm, 25 wt% of a vitrified bonding material, 25 wt% of sodium silicate and 25 wt% of polystyrene particles as organic particles,
granulating the kneaded product to produce granules having a particle diameter of 50 to 350 µm;
molding the granules into a predetermined form; and
firing the molded product having a predetermined form in a kiln,
as defined in claim 1.

The above super-abrasive grains are diamond abrasive grains having a diameter of 5 µm or less, and the particle diameter of the organic particles is set to 30 to 100 µm.

The vitrified bond grindstone obtained by the present invention has excellent self-sharpening due to its high porosity, whereby it exhibits excellent grindability and produces no striped scratch on the ground surface. Since pores in the vitrified bond grindstone obtained by the present invention are closed pores, even when its porosity is high, its strength can be ensured and hence, grinding canbe carried out at a sufficiently high grinding pressure.
Fig. 1 is a photograph of the grinding surface of a vitrified bond grindstone obtained according to the present invention; and
Fig. 2 is a perspective view of a grindstone prepared by setting segments obtained by cutting the vitrified bond grindstone obtained according to the present invention to a predetermined size, onto a wheel base.

A vitrified bond grindstone according to the present invention and the manufacturing process will be described in detail hereinunder

To obtain a vitrified bond grindstone having closed pores, it is important that super-abrasive grains, a vitrified bonding material, a foaming agent, i.e. sodium silicate and organic particles i.e. polystyrene particles should be kneaded together and granulated to produce granules. The super-abrasive grains are desirably diamond abrasive grains having a diameter of 0.5 µm (#8000) or less. The organic particles have a diameter of about 30 to 100 µm. The abrasive grains, vitrified bonding material, foaming agent and organic particles are kneaded together and granulated to form granules having a granule diameter of 50 to 350 µm. The thus formed granules are filled into a mold for molding andpressure-molded into a predetermined form, and this molded product is then fired in a kiln to obtain a vitrified bond grindstone having closed pores.

### [Example].

25 wt% of diamond abrasive grains having a diameter of about 2 µm, 25 wt% of a vitrified bonding material, 25 wt% of a foaming agent and 25 wt% of organic particles having a particle diameter of about 30 µm were kneaded together and granulated to produce granules having a diameter of 50 to 150 µm. The foaming agent was sodium silicate and the organic particles were polystyrene particles. The granules were formed by granulating the diamond abrasive grains, vitrified bonding material and foaming agent with the organic particles as nuclei. The granules were filled into a mold for molding and pressure-molded into a predetermined form, and this molded product was then fired in a kiln to manufacture a vitrified bond grindstone. The temperature in the kiln was increased up to 700°C in three hours, maintained at 700°C in three hours, then decreased to a normal temperature in seven hours.

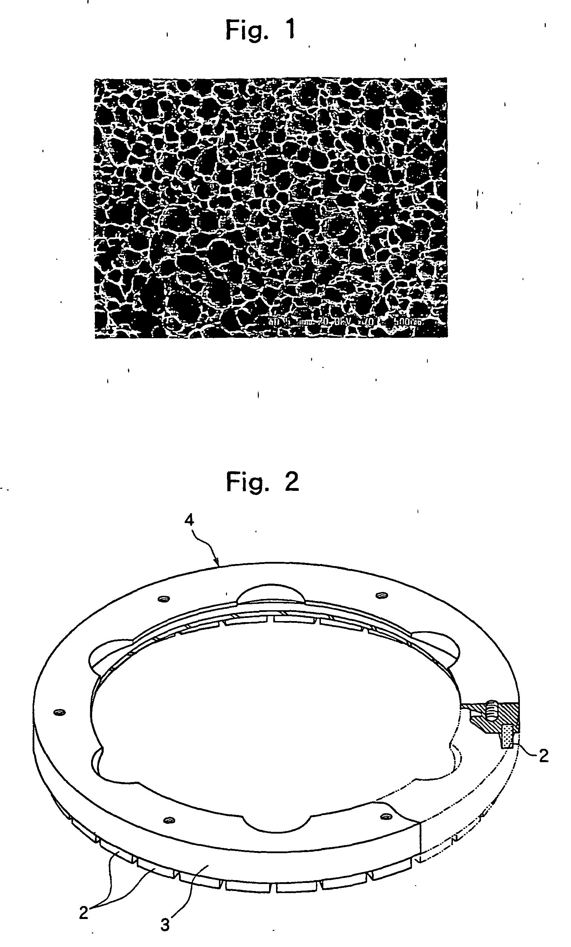

Fig. 1 is a photograph of the grinding surface of the vitrified bond grindstone manufactured as described above at a magnification of 100X. In Fig. 1, the white portions show bond bridge portions consisting of the bonding material, foaming agent and abrasive grains, and the black portions show pore portions. As understood from Fig. 1, the black portions were formed as completely closed pores and the porosity was 90 vol%. The reason why the closed pores were formed is considered to be that the organic particles were gone while a predetermined temperature was reached at the time of firing and that the vitrified bonding material, diamond abrasive grains and foaming agent surrounding the particles formed bond bridges.

The above constituted vitrified bond grindstone can ensure its strength even when its porosity is high because its pores are closed pores. According to experiments conducted by the inventors of the present invention, when a plurality of segments 2 obtained by cutting the vitrified bond grindstone manufactured in the above Example to a predetermined size and shape as shown in Fig. 2 were set in a wheel base 3 to constitute a grindstone 4 and grinding work was carried out with this grindstone 4, it was not broken even at a grinding pressure of 5 kg/cm².

As described above, the vitrified bond grindstone obtained by the present invention has excellent self-sharpening due to its high porosity, with the consequence that it exhibits excellent grindability and produces no striped scratch on the ground surface. Further, since pores in the vitrified bond grindstone obtained by the present invention are closed pores, its strength can be ensured even when its porosity is high. Accordingly, it becomes possible to grind at a sufficiently high grinding pressure.

## Claims

1. A process for manufacturing a vitrified bond grindstone that is made of super-abrasive grains bonded together with a vitrified bond having closed pores with a porosity of 75 to 95 vol%, **characterized in that** it comprises the steps of:
kneading together 25 wt% of diamond abrasive grains having a particle diameter of 2 µm, 25 wt% of a vitrified bonding material,25 wt% of sodium silicate and 25 wt% of polystyrene particles as organic particles,
granulating the kneaded product to produce granules having a particle diameter of 50 to 350 µm;
molding the granules into a predetermined form; and
firing the molded product having a predetermined form in a kiln.

2. The process according to claim 1, wherein the temperature in the kiln is increased up to 700°C in three hours, maintained at 700°C in three hours, then decreased to a normal temperature in seven hours.

## Patentansprüche

1. Verfahren zur Herstellung einer keramisch gebundenen Schleifscheibe, die aus superabrasiven Körnern hergestellt ist, miteinander gebunden durch eine keramische Bindung, mit geschlossenen Poren mit einer Porosität von 75 bis 95 Vol.-%, **dadurch gekennzeichnet, daß** es die Schritte umfaßt:
das Zusammenkneten von 25 Gew.-% abrasiver Diamantkörnchen mit einem Teilchendurchmesser von 2 µm, 25 Gew.-% eines keramischen Bindungsmaterials, 25 Gew.-% Natriumsilikat und 25 Gew.-% Polystyrolteilchen als organische Teilchen;
das Granulieren des gekneteten Produkts unter Erzeugung von Granalien mit einem Teilchendurchmesser von 50 bis 350 µm;
das Formen der Granalien in eine vorbestimmte Form, und
das Brennen des geformten Produkts mit einer vorbestimmten Form in einem Ofen.

2. Verfahren gemäß Anspruch 1, wobei die Temperatur in dem Ofen auf bis zu 700°C in drei Stunden erhöht wird, bei 700°C über drei Stunden beibehalten wird, dann in sieben Stunden auf eine Normaltemperatur abgesenkt wird.

## Revendications

1. Procédé de fabrication d'une meule à liant vitrifié qui est constituée de grains super-abrasifs liés ensemble avec un liant vitrifié ayant des pores fermés avec une porosité de 75 à 95% en volume, **caractérisé en ce qu'**il comprend les étapes de :
pétrissage ensemble de 25% en poids de grains abrasifs de diamant ayant un diamètre de particule de 2 µm, de 25% en poids d'un matériau de liant vitrifié, de 25% en poids de silicate de sodium et de 25% en poids de particules de polystyrène comme particules organiques,
granulation du produit pétri, pour produire des granulés ayant un diamètre de particule de 50 à 350 µm,
moulage des granulés en une forme prédéterminée ; et
cuisson du produit moulé ayant une forme prédéterminée, dans un four.

2. Procédé selon la revendication 1, dans lequel la température dans le four est augmentée jusqu'à 700°C en trois heures, maintenue à 700°C pendant trois heures, puis abaissée à une température normale, en sept heures.
